# EUROPÄISCHE PATENTANMELDUNG

(11) **EP 0 594 977 A1**
(43) Veröffentlichungstag der Anmeldung: **04.05.1994**
(21) Anmeldenummer: 93113868.9
(22) Anmeldetag: 31.08.1993
(51) Int. Cl.: C08J 9/24

(54) **Biologisch abbaubare Formkörper aus Granulatperlen**

(30) Priorität: 30.10.1992 DE 4236717
(71) Anmelder: STOROPACK HANS REICHENECKER GMBH + CO., D-71384 Weinstadt (DE)
(72) Erfinder: Kolaska, Karl-Heinz, D-74245 Löwenstein (DE); Voss, Gerd, D-7255 Metzingen (DE)
(74) Vertreter: Dreiss, Fuhlendorf & Steimle Patentanwälte

(57) **Zusammenfassung**

Granulatperlen, die hauptsächlich aus Stärke bestehen, werden in einer Form (25) mit trockenem Dampf oder Heißluft so behandelt, daß sie miteinander zu einem Formkörper verkleben.

## Beschreibung

Die Erfindung betrifft einen Formkörper aus aufgeschäumten und unter Druck in einer geschlossenen Form zumindest teilweise miteinander verbundenen Granulatperlen.

Solche Formkörper aus expandierbarem Polystyrol (EPS), die miteinander verschweißt werden, sind bekannt (DE-OS 37 22 539). Solche Formkörper bilden an ihrer Innenseite die Außenkontur des zu verpackenden Gegenstandes nach und können so rund um diesen Gegenstand gelegt werden. Ihre Außenseite ist glatt und so bemessen, daß sie zusammen mit dem zu verpackenden Gegenstand in einen Karton oder in eine Kiste passen.

Die Verwendung von Kunststoff ist jedoch ein großer Nachteil. Die Formkörper können aufgrund ihrer Anpassung an die Konturen des zu verpackenden Gegenstandes im allgemeinen nur einmal verwendet werden. Kunststoff ist schwierig wiederaufzuarbeiten. Die Formkörper sind daher Abfall und müssen aufwendig entsorgt werden.

Aufgabe der Erfindung ist es daher, Formkörper der eingangs genannten Art bereitzustellen, die bei vergleichbaren mechanischen Eigenschaften einfach herzustellen und umweltverträglich zu entsorgen sind.

Die Lösung der Aufgabe besteht darin, daß die Granulatperlen miteinander "verklebt" sind und aus biologisch abbaubarem Material gebildet werden. Nach einer bevorzugten Ausführungsform der Erfindung handelt es sich bei dem biologisch abbaubbaren Material im wesentlichen um Stärke. Insbesondere ist eine Mischung aus Stärke, Polyvinylalkohol und Wasser geeignet. Polyvinylalkohol ist wie Stärke wasserlöslich und biologisch abbaubar. Ein solcher Formkörper hat die Eigenschaft der verwendeten Granulatperlen, ist also biologisch abbaubar, z.B. bei Verwendung der o.g. Ausgangsstoffe wasserlöslich und damit durch Mikroorganismen zersetzbar. Dennoch weist er eine mit den herkömmlichen Formkörpern aus Kunststoff vergleichbare mechanische Belastbarkeit und die damit verbundenen Vorteile auf.

Weitere vorteilhafte Weiterbildungen ergeben sich aus den weiteren Unteransprüchen.

Die Herstellbarkeit von Formkörpern aus vorgeschäumten Granulatperlen aus biologisch abbaubarem Material ist für den Fachmann deshalb überraschend, weil nicht zu erwarten war, daß die Granulatperlen aus biologisch abbaubarem Material, z.B. Stärke, so stabil miteinander verbunden werden können, wie es für Formkörper notwendig ist. Zum anderen können Granulatperlen aus biologisch abbaubarem Material, z.B. Stärke, nicht wie Granulatperlen aus EPS durch Wärmeeinwirkung mittels Heißdampf miteinander verschweißt werden. Da zudem einerseits die Wärmebehandlung bei Formkörpern aus EPS durch heißen Dampf erfolgt (vgl. z.B. DE-OS 34 22 425) und andererseits biologisch abbaubares Material wie Stärke durch Wasser bzw. Wasserdampf schnell gelöst bzw. suspendiert wird, war eine Übernahme eines für Formkörper aus Kunststoff verwendeten Verfahrens nicht möglich und eine einfache Modifikation nicht aussichtsreich.

Bei der Herstellung der Formkörper nach der Erfindung macht man sich ein anderes Prinzip zunutze. Die Wärmebehandlung in der Form erfolgt bei nur sehr geringer relativer Feuchte. Man verwendet heiße Luft, die allenfalls eine geringe relative Restfeuchte von weniger als 5% aufweist. Die von diesem Grenzwert umfaßte absolute Feuchtigkeit (g/m³ Luft) bzw. das Mischungsverhältnis (g/kg Luft) sind temperatur- und druckabhängig. Bei 110°C und 3 bar ergibt sich maximal 20g Wasserdampf pro 1 kg Luft.

Statt heißer Luft kann man auch sehr trockenen Dampf benutzen, d.h. Dampf, dessen Dichte entsprechend weit unter dem Sättigungsbereich liegt.

Das Zuführen geringer Restfeuchte in heißer Luft oder trockenem Dampf in eine mit im wesentlichen aus Stärke bestehenden Granulatperlen gefüllte Form führt dazu, daß die Oberfläche der Granulatperlen leicht angelöst wird, ohne daß die Granulatperlen zerfallen bzw. sich auflösen. Nur die Oberflächen lösen sich an, werden klebrig und verbinden sich miteinander.

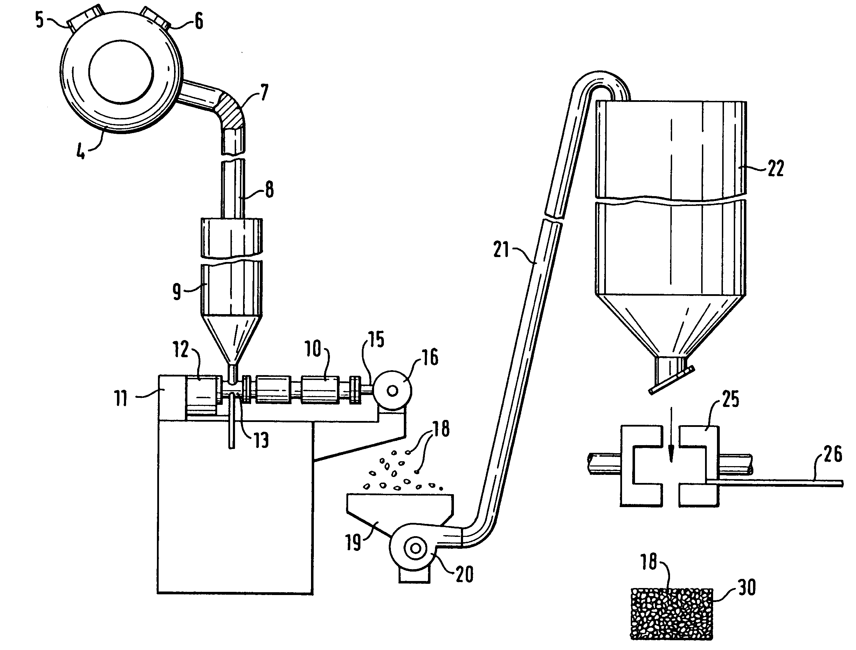

Ein Ausführungsbeispiel der vorliegenden Erfindung wird im folgenden anhand der beiliegenden einzigen Zeichnung beschrieben.

Als Ausgangsmaterial dienen Körner (im folgenden kurz: Stärkekörner), die zu 67% aus Stärke, zu 13-14% aus Polyvinylalkohol und zu 17-18% aus Wasser bestehen.

Die schematisch gezeigte Vorrichtung weist eine Trommel 4 auf, die über Öffnungen 5 und 6 mit Stärkekörnern und 0.1 - 0.2 Gew.%, feingemahlenem Nukleierungmittel (Korngröße ≦40 µm) sowie ggf. weiteren Additiven wie Farbstoffen und Hilfsmitteln beschickt wird. Nach dem Auftrommeln der Additive auf die Oberfläche der Stärkekörner wandern diese mit den daran haftenden staubfeinen Zusätzen durch eine Fördereinrichtung 7 und eine Förderleitung 8 in einen Fülltrichter 9 und von dort in den Extruder 10, der u.a. Antriebsmotor 11, Getriebe 12 und Materialeinzugszone 13, aufweist. An die Formöffnung 15 des Extruders 10 schließt eine Schneideeinrichtung 16 an. Die Stärkekörner werden in an sich bekannter Weise über die Materialeinzugszone 13 dem Extruder 10 zugeführt und bei 110 bis 200° C in eine viskose Masse verwandelt, wobei die in dem Extruder 10 befindliche Schnecke für eine gleichmäßige Durchmischung sorgt. Die Masse tritt aus der Formöffnung 15 aus, expandiert und wird durch die Schneideeinrichtung 16 in Granulatperlen 18 überführt, die in einem Sammelbehälter 19 aufgefangen werden. Diese aufgeschäumten Granulatperlen 18, die in den Bläschen in ihrem Inneren kein dehnbares Gas, sondern nur noch komprimierte Luft enthalten, können gelagert und bei Bedarf weiterverarbeitet werden.

Bei der unmittelbaren Weiterverarbeitung zu einem Formkörper 30 werden die aus Stärke, Polyvinylalkohol und Wasser bestehenden Granulatperlen 18 mittels eines Gebläses 20 und eine Sammelleitung 21 in einen Speicherbehälter 22 geleitet. Von dort aus gelangen sie in eine verschließbare Form 25. Die Form hat die gewünschte Kontur der zu bildenden Formkörper. Die Form 25 besitzt eine Zuführleitung 26 für die heiße Luft. In diese Form 25 werden die aufgeschäumten Granulatperlen 18 eingeschlossen. Dann erfolgt durch die Zuführung der heißen Luft (vorzugsweise 100-130°C) durch die Leitung 26. Die Restfeuchte des Dampfes oder der Heißluft von maximal 5 % löst die Oberfläche der Granulatperlen leicht an und macht sie damit klebrig. Die Granulatperlen kleben entlang ihrer aneinander anliegenden Oberflächenteile dadurch zusammen.

Der fertige Formkörper weist eine den bekannten Kunststofformkörpern vergleichbare mechanische Stabilität und Rückstehfähigkeit auf und ist biologisch abbaubar.

Die Kontrolle der Feuchte bei der Herstellung ist wichtig, da bei zu hoher Feuchte nicht nur ein Klebrigwerden der Oberfläche stattfindet, sondern sich die Granulatperlen zersetzen. Im einzelnen hängt das von Druck, Temperatur und dem Formkörpervolumen ab und muß entsprechend abgestimmt werden. Eine Restfeuchte von 0,5 - 2 % bei 105 - 120 °C bei 1 - 4 bar hat sich als vorteilhaft erwiesen.

### Bezugszeichenliste

- 4: Trommel
- 5: Öffnung
- 6: Öffnung
- 7: Fördereinrichtung
- 8: Förderleitung
- 9: Fülltrichter
- 10: Extruder
- 11: Antriebsmotor
- 12: Getriebe
- 13: Materialeinzugszone
- 14: Extruder
- 15: Formöffnung
- 16: Schneideeinrichtung
- 18: Granulatperlen
- 19: Sammelbehälter
- 20: Gebläse
- 21: Sammelleitung
- 22: Speicherbehälter
- 25: Form
- 26: Zuführleitung für Luft oder Dampf

## Patentansprüche

1. Formkörper aus aufgeschäumten, in einer geschlossenen Form (25) zumindest teilweise miteinander verbundenen Granulatperlen (18), **dadurch gekennzeichnet**, daß die Granulatperlen (18) aus biologisch abbaubarem Material bestehen und miteinander verklebt sind.

2. Formkörper nach Anspruch 1, dadurch gekennzeichnet, daß er in einer Form (25), in der die Granulatperlen (18) aufgenommen sind, bei Zufuhr von trockenem Dampf oder Heißluft mit weniger als 5 % Restfeuchte hergestellt wird, derart daß zumindest ein Teil der Oberfläche der Granulatperlen (18) zur gegenseitigen Verklebung angelöst wird.

3. Formkörper nach Anspruch 2, dadurch gekennzeichnet, daß die Granualtperlen (18) in der Form (25) unter Druck aufgenommen sind.

4. Formkörper nach Anspruch 2 oder 3, dadurch gekennzeichnet, daß die relative Restfeuchte 0,5 - 2 % beträgt.

5. Formkörper nach einem der Ansprüche 1 bis 4, dadurch gekennzeichnet, daß das biologisch abbaubare Material im wesentlichen Stärke ist.

6. Formkörper nach Anspruch 5, dadurch gekennzeichnet, daß außer Stärke noch Polyvinylalkohol und Wasser enthalten ist.
